(19) Europäisches Patentamt
European Patent Office
Office européen des brevets

(11) Publication number: **0 009 982**
**B1**

(12) # EUROPEAN PATENT SPECIFICATION

(45) Date of publication of patent specification: **18.05.83**

(51) Int. Cl.³: **D 21 H 1/42**, C 09 D 3/80, C 08 F 251/02

(21) Application number: **79302120.5**

(22) Date of filing: **05.10.79**

(54) **An aqueous polymer dispersion composition useful as a glazing coat for papers.**

(30) Priority: **06.10.78 JP 123152/78**

(43) Date of publication of application:
**16.04.80 Bulletin 80/8**

(45) Publication of the grant of the patent:
**18.05.83 Bulletin 83/20**

(84) Designated Contracting States:
**BE DE FR GB**

(56) References cited:
**FR - A - 1 011 000**
**GB - A - 721 660**
**GB - A - 1 080 973**

(73) Proprietor: **DAICEL LTD.**
**1, Teppo-Cho**
**Sakai-Shi, Osaka (JP)**

(72) Inventor: **Toba, Hirotaka**
**1211-2 Nishitsurugaoka Ohimachi**
**Iruma-gun, Saitama (JP)**
Inventor: **Mikumo, Masatoshi**
**1211-2 Nishitsurugaoka Ohimachi**
**Iruma-gun, Saitama (JP)**
Inventor: **Asami, Masahiro**
**1211-2 Nishitsurugaoka Ohimachi**
**Iruma-gun, Saitama (JP)**
Inventor: **Takenaka, Fumio**
**1211-2 Nishitsurugaoka Ohimachi**
**Iruma-gun, Saitama (JP)**

(74) Representative: **Shipton, Gordon Owen et al,**
**W.P. THOMPSON & CO. Coopers Building Church Street**
**Liverpool L1 3AB (GB)**

**EP 0 009 982 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# An aqueous polymer dispersion composition useful as a glazing coat for papers

The present invention relates to an aqueous polymer dispersion composition useful as a glazing coat for papers comprising an aqueous vinyl polymer dispersion containing nitrocellulose and having excellent blocking resistance and gloss.

For glazing treatment of printed papers, a glazing varnish in the form of a solution containing a resin and an organic solvent has been used heretofore. As the resin, a vinyl chloride resin has exclusively been used. However, the vinyl chloride resin has demerits in that surface gloss and strength of the finished surface are insufficient due to softness thereof and blocking is easily caused. Other demerits are that the organic solvent used harms the health of workers and that there is a risk of fire. Under circumstances as above, the utilization of said varnish is now limited for the prevention of environmental pollution. Other techniques of the glazing treatment are press working and lamination working. However, they have a demerit of inviting an increase in the number of steps, though efficiencies are increased.

Lacquers containing nitrocellulose as a base have been used so as to improve abrasion resistance and to impart gloss and blocking resistance. However, those lacquers are also unfavourable, since they are harmful due to solvents contained therein as described above.

Recently, glazing treatment of paper with an aqueous dispersion of acrylic polymers containing methyl methacrylate and styrene as principal components has been effected extensively. However, this technique has problems with the film-forming property of the dispersion and blocking caused at a high temperature and a high humidity.

After intensive investigations for the purpose of developing an aqueous polymer dispersion as a glazing coat for papers having excellent gloss and surface properties such as blocking resistance, the inventors have found that an aqueous polymer dispersion composition obtained by dispersing a vinyl monomer in which nitrocellulose has been dissolved and thereafter polymerizing the monomer does not cause environmental pollution and that a coating film obtained by applying the composition to a paper and drying the same has excellent physical properties (which could not be attained by using conventional aqueous dispersions) such as blocking resistance and also a high adhesion to the paper and an excellent gloss. The present invention has been attained on the basis of this finding.

The present invention relates to an aqueous polymer dispersion composition useful as a glazing coat for papers in which 100 parts by weight of the polymer comprise 3—35 parts by weight of nitrocellulose and 97—65 parts by weight of a vinyl polymer in which nitrocellulose is soluble or with which nitrocellulose is compatible irrespective of the state (monomer or polymer) of the vinyl polymer and which vinyl polymer satisfies the following two formulae for second-order transition temperature (Tg):

$$Tg \geqq -160(NC/NC + P) - 10 \qquad [°C]$$

$$60 \geqq Tg \geqq -50 \qquad [°C]$$

wherein NC represents parts by weight of nitrocellulose and P represents parts by weight of the vinyl polymer; said composition being obtained by adding a film-forming assistant to an aqueous polymer dispersion formed by dissolving nitrocellulose in said vinyl polymer-forming monomer (hereinafter referred to as vinyl monomer), dispersing the solution in the form of oil particles in water and polymerizing the monomer.

The composition of the present invention has greatly improved blocking resistance (for example, prevention of blocking of coating films with each other or blocking with soft vinyl products), gloss and hardness owing to the nitrocellulose contained therein and improved adhesion to the papers, flexibility and scratch resistance owing to the vinyl copolymer contained therein. The nitrocellulose and vinyl copolymer are highly compatible with each other. After intensive investigations on various acrylic copolymers of different Tg values and nitrocellulose contents of the copolymers, the inventors have found that characteristic features of them can remarkably be improved by selecting them in the ranges shown by the above two formulae of Tg. The present invention has been attained on the basis of this finding. Values of Tg herein indicate those determined with a Vibron. Nitrocellulose has generally a high Tg value. For obtaining an aqueoue nitrocellulose dispersion, usually, it is dissolved in an organic solvent and the solution is dispersed in water as fine particles by a chemical or mechanical means. However, according to the process of the present invention, nitrocellulose is dissolved in a vinyl monomer and the solution is dispersed in water as particles of micron order of size and thereafter the polymerization is carried out. Therefore, the resulting polymer dispersed in water is in the form of homogeneous fine particles of the nitrocellulose and the vinyl polymer mutually dissolved in each other. Consequently, coating films obtained by applying the dispersion to papers and then drying the same have excellent physical properties such as blocking resistance which could not be attained by using ordinary aqueous dispersions and, in addition, the coating films are uniform and have also excellent adhesion to the papers and excellent gloss.

As nitrocelluloses used in the present invention, those used generally for lacquers can be used without any particular limitation. The nitrocellulose content of the polymer compositions is 3—35 parts by weight, preferably 10—30 parts by weight. If the nitrocellulose content is insufficient, the gloss obtained is poor and blocking cannot be prevented. On the other hand, if the nitrocellulose content is excessive, the gloss, adhesion and film-forming property at room temperature are all reduced.

As the vinyl monomers, there may be used those containing at least one monomer in which nitrocellulose is soluble. The vinyl monomers in which nitrocellulose is soluble include acrylic monomers of the general formula:

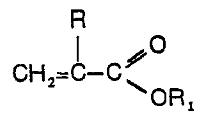

wherein R represents hydrogen or a methyl group and $R_1$ represents an alkyl group having 1—20 carbon atoms, a cyclo-alkyl group in which the alkyl group has 5 or 6 carbon atoms, $—CH_2CH_2OCH_2CH_3$, $—C_6H_5$ or $—CH_2C_6H_5$. As the acrylic monomers, there may be mentioned ethyl acrylate, butyl acrylate, 2-ethylhexyl acrylate and methyl methacrylate. Those compounds may be used either alone or in the form of a mixture.

Other useful monomers include the following compounds:

(1) Styrene and substituted styrenes of the general formula:

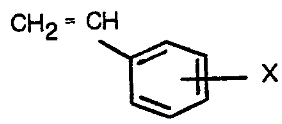

wherein X represents hydrogen, $CH_3$, a halogen such as Cl, Br, $NO_2$, $NH_2$ of an $N(alkyl)_2$ in which the alkyl group has one or two carbon atoms; as well as combinations of them with acrylic comonomers. Preferably, X represents hydrogen or $CH_3$.

(2) Vinyl acetate and vinyl esters of a higher aliphatic acid, such as propionic vinyl ester and butyric vinyl ester, preferably vinyl acetate as well as vinyl acetate/acrylic acid ester comonomers.

(3) Combinations of vinyl chloride or vinylidene chloride with an acrylic comonomer.

As a monomer which enhances stabilization of the aqueous polymer dispersion and adhesion thereof to the paper, there may be used a small proportion (based on the whole of the monomers) of at least one of the monomers of the general formula:

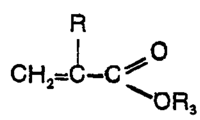

wherein R represents hydrogen or a methyl group, $R_3$ represents hydrogen or a 2-sulfoethyl group or a hydroxyalkyl group in which the alkyl group has 1—4 carbon atoms, such as acrylic acid or methacrylic acid, and monomers of the general formula:

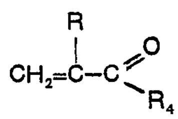

wherein R represents hydrogen or a methyl group and $R_4$ represents $NH_2$, $NHCH_2OH$ or an $NHCH_2O$-alkyl group in which the alkyl group has 1—4 carbon atoms. Further, up to about 20%, based on the total monomers, of an $\alpha,\beta$-unsaturated carbocylic ester having an epoxy group such as acrylonitrile, methacrylonitrile, glycidyl acrylate or glycidyl methacrylate may be contained therein as a minor monomer component.

It is preferred to use a surfactant in the preparation of the aqueous polymer dispersion according to the present invention. As the surfactants, there may be used anionic surfactants, nonionic surfactants and combinations of the anionic and nonionic surfactants. As the anionic surfactants, there may be mentioned alkyl- and alkyl-arylsulfonic acid salts and sulfuric acid salts, dialkylsulfosuccinic acid salts, sulfuric acid salts of nonionic surfactants and complex phosphate esters. As the nonionic surfactants, there may be mentioned polyoxyethylene carboxylic esters, polyoxyethylene nonylphenyl ether, polyoxyethylene alkyl ethers, polyoxyethylene sorbitan monocarboxylic esters and ethylene oxide-propylene oxide block copolymers.

Colloids and high molecular weight stabilizers may be used either alone or in combination with the above mentioned surfactants. As the stabilizers, there may be mentioned complicated polysaccharides, amylopectins, water-soluble derivatives of cellulose, polyvinyl alcohols, alginic acid salts of polyvinyl alcohols and carragheenin.

The dispersion in water can be attained by completely dissolving nitrocellulose in the monomer and then directly dispersing a mixture of nitrocellulose, the vinyl monomer and other additives in water.

The polymerization is effected by using a radical initiator to obtain an aqueous polymer dispersion in which generally at least two polymers are present substantially homogeneously in the aqueous polymer dispersion, i.e. in the dispersed particles. The polymerization temperature ranges from 0°C to 200°C, preferably from room temperature to 100°C. The reaction is carried out for from several minutes to several hours, generally for from 30 minutes to about 6 hours.

As the polymerization initiators, known water-soluble or oil-soluble polymerization initiators can be used in the presence or absence of a reducing agent. Typically, the initiators are used in an amount of 0.01—1.0 part by weight per 100 parts by weight of the polymerizable monomer.

Additives generally used for aqueous polymer dispersions such as a solvent, plasticizer, pigment, thickening agent, an antifoaming agent, a blocking-preventing agent and an agent for preventing yellowing can be used, if necessary. Further, a resin compatible therewith such as a water-soluble acrylic resin and a water-soluble alkyd resin may also be added thereto.

Film-forming assistants are used for improving the film-forming properties or physical properties of the coating film according to the present invention. As the film-forming assistants, glycol ether acetates are preferred. There may be used, for example, ethoxyethylene glycol acetate, n-butoxyethylene glycol acetate, diethylene glycol n-butyl acetate and ethylene glycol n-butyl ether acetate (butyl cellosolve acetate). Of these, butyl cellosolve acetate is preferred. It is used preferably in an amount of 5—25 parts by weight per 100 parts by weight of the aqueous polymer dispersion.

In carrying out the present invention, generally up to 15 parts by weight of a co-solvent such as a ketone, for example, methyl isobutyl ketone or isophorone or an acetic ester, for example, n-butyl acetate or n-amylacetate or a plasticizer such as a glycol, for example, ethylene glycol or propylene glycol may be added to the aqueous polymer dispersion.

The film-forming assistant, plasticizer and co-solvent may be introduced into the reaction system at any time during the dispersion step.

For coating papers with the aqueous polymer dispersion of the present invention, any of the known methods such as the size press coating method, the calender coating method, the roll coater method, the air doctor method and the blade coater method can be employed. The amount of the aqueous polymer dispersion which varies depending on the properties of a paper to be coated is substantially the same as that of ordinary glazing varnish to cause a satisfactory glaze. The usual amount is preferably in the range between about 4 and about 10 g/m$^2$ expressed as the solid content.

In the drying step, a drying temperature which varies depending on the Tg of the resin and the amounts of plasticizer and solvent contained therein is generally in the range of from room temperature to 150°C, preferably 50—130°C. The drying time which varies depending on the quality of the paper and the temperature is in the range of from 5 seconds to 5 minutes. A sufficient gloss can be obtained even if a hot press is not utilized.

The following examples further illustrate the present invention, in which parts and percentages are given by weight unless otherwise stated. Gloss, scratch test, adhesion, blocking resistance and abrasion resistance were determined for assessing properties of the coating films by the following methods:

Gloss: 60° Mirror plane reflectivity:

Values above 70 stood the test.

Scratch test: The coating films were scratched with a nail and degrees of peeling were examined. Those showing no peeling stood the test.

Adhesion: A "Cellophane" (Trade Mark) tape was pressed against the samples five times with the fingers and then peeled off forcibly. Degrees of peeling were examined. Those showing no peeling stood the test.

Blocking resistance test: The samples were placed face to face one over the other at 40°C and 90% RH under a load of 300 g/cm$^2$ for 24 hours. 30 minutes after removal of the load, degrees of separation of the faces from each other were examined. Samples of which the natural separation was achieved stood the test.

Abrasion resistance test: The samples placed face to face were rubbed with the fingers. Those which were not peeled off after 50 times stood the test.

Monomers used are shown as given below:

| | |
|---|---|
| MMA: | Methyl methacrylate |
| MAA: | Methacrylic acid |
| St: | Styrene |
| EA: | Ethyl acrylate |
| 2—EHA: | 2-Ethylhexyl acrylate |
| BA: | Butyl acrylate |
| AA: | Acrylic acid |

Other abbreviations used below are:

| | |
|---|---|
| RS: | Regular soluble |
| SS: | Spirit soluble |

Example 1

Into an ice-cooled vessel, nitrocellulose, vinyl monomers and other additives were charged so that the NC/P would be 30/70 and the monomer ratio would be (MMA/2—EHA)/MAA = (70/30)/1.5 (Tg = 18.6°C). More particularly, in a one-liter four neck flask, there were charged 161.1 g of nitrocellulose (RS—1/8) of a water content of 46.4% (a product of Daicel Kabushiki Kaisha), 11.8 g of anionic composite phosphate ester emulsifier, 19.7 g of anionic alkylaryl sulfonate, 4.1 g of sodium hydrogencarbonate, 0.8 g of antifoaming agent and 233 g of distilled water. Then, a monomer phase comprising 140 g of MMA, 60 g of 2—EHA, 3 g of MAA and 0.2 g of chain transfer agent was added thereto. The mixture was mixed with a Homomixer, type M (a product of Tokushu Kiki Kogyo-Sha) for 45 minutes. Then, a condenser, a stirrer and a nitrogen-introducing pipe were attached to the flask and nitrogen replacement was effected sufficiently. The contents of the flask were heated to 65°C. Then, an aliquot of 28.3 g of a solution of 0.41 g of potassium persulfate in 40 g of distilled water was added thereto to initiate the reaction. After generation of heat ceased, the mixture was kept at 65°C for 60 minutes. Then the remainder of the aqueous potassium persulfate solution, 5 g of distilled water and 0.08 g of sodium hydrogensulfite were added thereto. The temperature was elevated to 80°C and the whole was kept at this temperature for 90 minutes to obtain an aqueous polymer dispersion having a pH of 6.7, a viscosity of 14 mPas (BL viscometer, rotor No.1, 60 rpm; 30°C) and a solids content of 45%.

15 parts of butylcellosolve acetate (hereinafter referred to as BCeA) were added to 100 parts of the aqueous polymer dispersion and the whole was mixed thoroughly. The mixture was allowed to stand for one day, applied to a hiding rate test paper with a No.10 bar coater and dried at 120°C for 30 seconds.

The paper to which the sample was applied was subjected to blocking resistance test, gloss measurement, adhesion test and scratch test. The results are shown in Table 2, which indicate that blocking resistance and gloss were excellent and that as a whole, the product was excellent.

Example 2

Components were charged into the vessel so that the NC/P would be 35:65 and the monomer ratio would be (MMA/2—EHA)/MAA = (60/40)/1.5 (Tg = −2.2°C). More particularly, the polymerization was carried out by using 203.9 g of nitrocellulose (RS 1/8) of a water content of 46.4%, 120 g of MMA, 80 g of 2—EHA, 3 g of MAA, 215.7 g of distilled water, 10.2 g of anionic composite phosphate ester emulsifier and 36.3 g of sulfate emulsifier of nonionic surfactant. 25 parts of BCeA were added to 100 parts of the resulting aqueous polymer dispersion. The mixture was applied to a paper, dried and subjected to the tests.

The results are shown in Table 2 which indicate that blocking resistance and gloss were excellent and that as a whole, the product was excellent.

Example 3

Components were charged into the vessel so that NC/P would be 25/75 and the monomer ratio would be (MMA/2—EHA)/MAA = (50/50)/1.5 (Tg = −20.2°C). More particularly, the polymerization was carried out by using 100.7 g of nitrocellulose (SS 1/4) of a water content of 32.7%, 100 g of MMA, 100 g of 2—EHA, 3 g of MAA, 8.8 g of anionic composite phosphate ester emulsifier and 14.7 g of anionic alkylaryl sulfate emulsifier in the same manner as in Example 1. 10 parts of BCeA and 5 parts of dibutyl phthalate (hereinafter referred to as DBP) were added to 100 parts of the resulting aqueous polymer dispersion. The whole was stirred thoroughly and allowed to stand for one day, applied to a hiding rate test paper with a No.10 bar coater and dried at 120°C for 30 seconds. The resultant coated paper was subjected to tests to obtain results shown in Table 2 which indicate that blocking resistance, gloss and adhesion were excellent and that as a whole, the product was excellent.

Comparative Example 1

Components were charged into the vessel so that the NC/P ratio would be 20/80 and the monomer ratio would be (MMA/2—EHA)/MAA = (30/70)/1.5 (Tg = −49.9°C). Namely, the polymerization was carried out by using 94.7 g of nitrocellulose (RS 1/8) of a water content of 46.4%, 60 g of MMA, 140 g of 2—EHA, 3 g of MAA, 8.3 g anionic composite phosphate ester emulsifer, 13.8 g of anionic alkylaryl sulfate emulsifier and 216.7 g of distilled water in the same manner as in Example 1. BCeA was added thereto in the same manner as in the preceding examples and the mixture was applied to a paper, dried and subjected to the tests. The results are shown in Table 2.

Example 4

Components were charged into the vessel so that the NC/P ratio would be 20/80 and the monomer ratio would be (MMA/BA)/MAA = (30/70)/1.5 (Tg = −20.7°C). Namely, the polymerization was carried out by using 126.2 g of nitrocellulose (RS 1/16) of a water content of 59.8%, 60 g of MMA, 140 g of BA and 3 g of MAA in the same manner as in Example 1. After the addition of BCeA, application to a paper and drying the sample was tested to obtain the results shown in Table 2.

Example 5

Components were charged into the vessel so that the NC/P ratio would be 25/75 and the monomer ratio would be (MMA/EA)/AA = (40/60)/1.5 (Tg = 17.8°C). Namely, the polymerization was carried out by using 126.2 g of nitrocellulose (RS 1/8) of a water content of 46.4%, 80 g of MMA, 120 g of EA, 3 g of AA, 10.7 g of anionic composite phosphate ester emulsifier and 17.8 g of anionic alkylaryl sulfate emulsifier in the same manner as in Example 1. Then, BCeA and DBP were added thereto and the mixture was applied to a paper, dried and subjected to the tests in the same manner as in Example 2. The results are shown in Table 2.

Example 6

Components were charged into the vessel so that NC/P ratio would be 35/65 and the monomer ratio would be (St/BA)/MAA = (30/70)/1.5 (Tg = −21.4°C). Namely, the polymerization was carried out by using 200.6 g of nitrocellulose (RS 1/4) of a water content of 45.5%, 60 g of St, 140 g of BA, 3 g of MAA, 13.1 g of anionic composite phosphate ester emulsifier and 21.9 g of anionic alkylaryl sulfate emulsifier in the same manner as in Example 1. Then, BCeA was added thereto and the mixture was applied to a paper, dried and subjected to the tests in the same manner as above. The results are shown in Table 2. It is apparent that the product had excellent blocking resistance and gloss.

Comparative Example 2

Components were charged so that NC/P would be 20/80 and the monomer ratio would be (MMA/2—EHA)/MAA = (89.5/10.5)/1.5 (Tg = 70.0°C). Namely, the polymerization was carried out by using 93.1 g of nitrocellulose (RS 1/4) of a water content of 45.5%, 179 g of MMA, 21 g of 2—EHA, 3 g of MAA, 8.2 g of anionic composite phosphate ester emulsifier and 13.7 g of anionic alkylaryl sulfate emulsifier in the same manner as in Example 1 and the mixture then treated also in the same manner as in Example 1. The results of the tests are shown in Table 2.

Example 7

Components were charged into the vessel so that NC/P ratio would be 30/70 and the monomer ratio would be (MMA/2—EHA/GMA)/MAA = (65/30/5)/1.5 (Tg = 16.6°C). Namely, the polymerization was carried out by using 162.3 g of nitrocellulose (RS 1/8) of a water content of 46.4%, 130 g of MMA, 60 g of 2—EHA, 10 g of GMA, 3 g of MAA, 11.9 g of anionic composite phosphate ester emulsifier and 19.8 g of anionic alkylaryl sulfate in the same manner as in Example 1, the mixture then treated also in the same manner as in Example 1 and subjected to the tests. The results ae shown in Table 2.

Comparative Example 3

10 parts of BCeA and 5 parts of DBP were added to 100 parts of the aqueous polymer dispersion obtained in Comparative Example 2 and the whole was stirred thoroughly. After allowing to stand for one day, the mixture was applied to a paper, dried and subjected to the tests to obtain the results shown in Table 2.

Comparative Example 4

A product of solvent type (a vinyl polymer of P. Company) was directly applied to a hiding rate test paper with a No.10 bar-coater, then dried and subjected to the tests to obtain the results shown in Table 2.

Comparative Example 5

A product of acrylic emulsion type (a product of Q. Company) was polymerized and treated in the same manner as in Comparative Example 4 to obtain the results shown in Table 2.

The following Table 1 gives the compositions and properties of the dispersions described in the above Examples.

TABLE 1

Compositions and properties of emulsions

| | Monomer ratio | | | | | | | | Tg | NC / NC+P | NC | Properties of emulsion | | | |
|---|---|---|---|---|---|---|---|---|---|---|---|---|---|---|---|
| | MMA | St | 2–EHA | BA | EA | GMA | MAA | AA | | | | N.V. | Vis. mPas | pH | MFT |
| Example 1 | 70 | | 30 | | | | 1.5 | | 18.6 | 0.30 | RS 1/8 | 44.9 | 14 | 6.7 | >80 |
| 2 | 60 | | 40 | | | | 1.5 | | –2.2 | 0.35 | RS 1/8 | 45.2 | 12 | 6.7 | >80 |
| 3 | 50 | | 50 | | | | 1.5 | | –20.2 | 0.25 | SS 1/4 | 44.5 | 12 | 6.6 | 41 |
| 4 | 30 | | | 70 | | | 1.5 | | –20.7 | 0.20 | RS 1/16 | 45.8 | 10 | 6.7 | 34 |
| 5 | 40 | | | | 60 | | | 1.5 | 17.8 | 0.25 | RS 1/8 | 45.0 | 12 | 6.5 | 72 |
| 6 | | 30 | | 70 | | | 1.5 | | –21.4 | 0.35 | RS 1/4 | 45.4 | 16 | 6.2 | 37 |
| 7 | 65 | | 30 | | | 5 | 1.5 | | 16.6 | 0.30 | RS 1/8 | 45.2 | 11 | 6.3 | >80 |
| Comparative Example 1 | 30 | | 70 | | | | 1.5 | | –49.9 | 0.20 | RS 1/8 | 44.6 | 30 | 6.7 | <0 |
| 2 | 89.5 | | 10.5 | | | | 1.5 | | 70 | 0.20 | RS 1/4 | 45.8 | 14 | 6.5 | >80 |
| 4 | vinyl polymer of the solvent type | | | | | | | | – | – | – | (35.1) | (300) | – | – |
| 5 | | 26.5 | | 15.5 | | | 5.0 | | – | – | – | 41.5 | 110 | 7.0 | 63 |

Measurement of properties of emulsion

Solid content (N.V.): One gram of emulsion (Em) was weighed into a 3 cm × 3 cm aluminium vessel, dried in a geer oven at 60°C till constant weight was attained. Then, weight of the sample was measured and solid content was calculated from the weight.

Viscosity (Vis): Measured with BL-viscometer (rotor No. 1) at 60 rpm, 30°C.

Minimum film-forming temp. (MFT): Measured with a minimum film-forming temperature measuring device (a product of Terakawa Seisaku-sho Co.) (temp. range: 0—80°C).

TABLE 2

Properties of coating films

| | Recipe*1) | Properties of coating films*2) | | | | Remarks |
|---|---|---|---|---|---|---|
| | | Gloss | Blocking resistance | Adhesion | Scratch resistance | |
| Example 1 | A | 79 | o | o | o | |
| 2 | A | 79 | o | o | o | |
| 3 | B | 74 | o | o | o | |
| 4 | A | 74 | o | o | o | |
| 5 | B | 75 | o | o | o | |
| 6 | A | 82 | o | o | o | |
| 7 | B | 76 | o | o | o | |
| Comparative Example 1 | A | 60 | x | o | △ | |
| 2 | A | 45 | x | x | x | |
| 3 | B | 38 | x | △ | x | |
| 4 | – | 79 | x | o | △ | Solvent-type (a vinyl polymer of P Co.) |
| 5 | – | 63 | x | o | o | Acrylic Em (a product of Q Co.) |

*1) Recipe A: Emulsion (Em) 100 Parts, BCeA 15 Parts

,, B: Em 100 Parts, BCeA 10 Parts

DBP 5 Parts

*2) Judgement of properties of coating films:

o : good △ : slightly bad x : bad

**Claims**

1. An aqueous polymer dispersion composition useful as a glazing coat for papers in which the composition comprises 3 to 35 parts by weight of nitrocellulose and 97 to 65 parts by weight of a vinyl polymer per 100 parts by weight of the combined weights of nitrocellulose and vinyl polymer, wherein the vinyl polymer satisfies the following two formulae for second-order transition temperature (Tg):

$$Tg \geqq -160(NC/NC + P) -10 \quad [°C]$$

$$60 \geqq Tg \geqq -50 \quad [°C]$$

wherein NC represents parts by weight of nitrocellulose and P represents parts by weight of the vinyl polymer; said composition being obtained by adding a film-forming assistant to an aqueous polymer dispersion formed by dissolving nitrocellulose in said vinyl polymer-forming monomer, dispersing the solution in the form of liquid particles in water and polymerizing the monomer; the nitrocellulose being soluble in or compatible with the monomer or the vinyl polymer.

2. A composition as claimed in claim 1 in which the amount of nitrocellulose is 10 to 30 parts by weight.

3. A composition as claimed in claim 1 or 2, in which the vinyl polymer-forming monomer is an acrylic monomer, a styrene monomer, a vinyl ester or a combination of vinyl or vinylidene chloride with an acrylic comonomer.

4. A composition as claimed in claim 3, in which up to 20 weight percent, based on the total monomers, of an alpha, beta-unsaturated carboxylic ester having an epoxy group or acrylonitrile is contained therein as a minor monomer component.

5. A composition as claimed in any one of claims 1 to 4, which also contains a dispersion stabilizer.

6. A composition as claimed in any one of claims 1 to 5, in the preparation of which a surfactant is used.

7. A composition as claimed in any one of claims 1 to 6 in which the polymerization of the monomer is effected using a radical initiator.

8. A composition as claimed in any one of claims 1 to 7 in which the polymerization temperature ranges from 0° to 200°C.

9. A composition as claimed in any one of claims 1 to 8 in which the film forming assistant is a glycol ether acetate.

10. A composition as claimed in claim 9 in which up to 15 parts by weight, based on 100 parts by weight of the composition, of a co-solvent or plasticizer are contained therein.

11. A composition as claimed in any one of claims 1 to 10 in which the film forming assistant is used in an amount of 5 to 25 parts by weight per 100 parts by weight of the aqueous polymer dispersion, when the concentration of polymer in the dispersion about 45 weight percent.

12. Glazed papers obtained by coating papers with an aqueous polymer dispersion composition as claimed in any one of claims 1 to 11 and drying the coated papers.

**Patentansprüche**

1. Wäßrige Polymerendispersions-Zusammensetzung, die als Glanzkaschierung für Papiere gut geeignet ist und 3 bis 35 Gew.-Teile Nitrocellulose und 97 bis 65 Gew.-Teile eines Vinylpolymeren auf 100 Gew.-Teile des Gesamtegewichts von Nitrocellulose und Vinylpolymerem enthält, dadurch gekennzeichnet, daß das Vinylpolymere die durch die beiden folgenden Formeln für die Glasübergangstemperatur (Tg) festgelegten Bedingungen erfüllt

$$Tg \geqq -160\ (NC/NC + P) - 10 \qquad [°C]$$
$$60 \geqq Tg \geqq -50 \qquad [°C]$$

worin NC die Gew.-Teile Nitrocellulose und P die Gew.-Teile des Vinylpolymeren bezeichnen, wobei diese Zusammensetzung erhalten wird durch Zusatz eines Folienbildungs-Hilfsmittels zu einer wäßrigen Polymerendispersion, die dadurch gebildet wird, daß Nitrocellulose in dem das genannte Vinylpolymere bildenden Monomeren aufgelöst wird, die Lösung in Form flüssiger Teilchen in Wasser dispergiert wird und das Monomere polymerisiert wird, wobei die Nitrocellulose löslich in oder verträglich mit dem Monomeren oder dem Vinylpolymeren ist.

2. Zusammensetzung nach Anspruch 1, dadurch gekennzeichnet, daß die Menge der Nitrocellulose 10 bis 30 Gew.-Teile beträgt.

3. Zusammensetzung nach Anspruch 1 oder 2, dadurch gekennzeichnet, daß das das Vinylpolymere bildende Monomere ein Acryl-Monomeres, ein Styrol-Monomeres, ein Vinylester oder eine Kombination aus Vinylchlorid oder Vinylidenchlorid mit einem acrylischen Comonomeren ist.

4. Zusammensetzung nach Anspruch 3, dadurch gekennzeichnet, daß bis zu 20 Gew.-%, bezogen auf die Gesamtmenge der Monomeren, eines alpha, beta-ungesättigten Esters mit einer Epoxy-Gruppe oder Acrylnitril als Monomeren-Nebenbestandteil darin enthalten sind.

5. Zusammensetzung nach einem der Ansprüche 1 bis 4, dadurch gekennzeichnet, daß sie außerdem einen Dispersionsstabilisator enthält.

6. Zusammensetzung nach einem der Ansprüche 1 bis 5, dadurch gekennzeichnet, daß zu ihrer Herstellung ein oberflächenaktives Mittel verwendet wird.

7. Zusammensetzung nach einem der Ansprüche 1 bis 6, dadurch gekennzeichnet, daß die Polymerisation des Monomeren unter Verwendung eines Radikal-Initiators durchgeführt wird.

8. Zusammensetzung nach einem der Ansprüche 1 bis 7, dadurch gekennzeichnet, daß die Polymerisationstemperatur im Bereich von 0°C bis 200°C liegt.

9. Zusammensetzung nach einem der Ansprüche 1 bis 8, dadurch gekennzeichnet, daß das Folienbildungs-Hilfsmittel ein Glycoletheracetat ist.

10. Zusammensetzung nach Anspruch 9, dadurch gekennzeichnet, daß bis zu 15 Gew.-Teile, bezogen auf 100 Gew.-Teile eines Lösungshilfsmittels (Co-Solvens) oder Weichmachers darin enthalten sind.

11. Zusammensetzung nach einem der Ansprüche 1 bis 10, dadurch gekennzeichnet, daß das Folienbildungs-Hilfsmittel in einer Menge von 5 bis 25 Gew.-Teilen auf 100 Gew.-Teile der wäßrigen Polymerendispersion verwendet wird, wenn die Konzentration des Polymeren in der Dispersion etwa 45 Gew.-% beträgt.

12. Glanzkaschierte Papiere, erhalten durch Beschichten von Papieren mit einer wäßrigen Polymerendispersions-Zusammensetzung nach einem der Ansprüche 1 bis 11 und Trocknen der beschichteten Papiere.

**Revendications**

1. Composition polymérique aqueuse pour produire un revêtement de glaçage sur le papier, qui comprend de 3 à 35 parties en poids de nitrocellulose et de 97 à 65 parties en poids d'un polymère vinylique pour 100 Parties en poids du poids total de la nitrocellulose et du polymère vinylique, dans laquelle le polymère vinylique répond aux deux formules suivantes se rapportant à la température de transition de second ordre (Tg):

$$Tg \geqq -160(NC/NC + P) - 10 \quad [°C]$$
$$60 \geqq Tg - 50 \quad [°C]$$

dans laquelle NC represénté des parties en poids de nitrocellulose et P représente des parties en poids du polymère vinylique; ladite composition étant obtenue en ajoutant un agent favorisant la formation d'une pellicule à la dispersion polymérique aqueuse formée en dissolvant la nitrocellulose dans ledit monomère vinylique polymérisable, en dispersant la solution sous la forme de particules liquides dans l'eau et en polymérisant le monomère; la nitrocellulose utilisée étant soluble dans ou compatible avec le monomère ou le polymére vinylique.

2. Composition selon la revendication 1, caractérisée en ce que la quantité de nitrocellulose est de 10 à 30 parties en poids.

3. Composition selon la revendication 1 ou 2, caractérisée en ce que le monomère vinylique polymérisable est un monomère acrylique, un monomère de styrène, un ester vinylique ou une combinaison d'un chlorure de vinyle ou de vinylidène avec un comonomère acrylique.

4. Composition selon la revendication 3, caractérisée en ce qu'elle contient, en tant que composant monomère mineur jusqu'à 20% en poids, en se basant sur le poids total des monomères, d'un ester carboxylique alpha, béta insaturé ayant un groupe epoxy ou acrylonitrile.

5. Composition, selon l'une quelconque des revendications précédentes, caractérisée en ce qu'elle contient aussi un agent de stabilisation de dispersion.

6. Composition, selon l'une quelconque des revendications précédentes, caractérisée en ce qu'on utilise un agent surfactif dans la préparation.

7. Composition, selon l'une quelconque des revendications précédentes, caractérisée en ce qu'on utilise un initiateur radicalaire en effectuant la polymérisation du monomère.

8. Composition, selon l'une quelconque des revendications précédentes, caractérisée en ce que la température de polymérisation est comprise entre 0° et 200°C.

9. Composition, selon l'une quelconque des revendications précédentes, caractérisée en ce que l'agent contribuant à la formation de la pellicule est un acétate de glycol éther.

10. Composition, selon la revendication 9, caractérisée en ce qu'elle contient jusqu'à 15 parties en poids, en se basant sur 100 parties en poids de ladite composition, d'un cosolvant ou d'un plastifiant.

11. Composition, selon l'une quelconque des revendications précédentes, caractérisée en ce que l'agent contribuant à la formation de la pellicule est utilisé dans une proportion de 5 à 25 parties en poids pour 100 parties en poids de la dispersion polymèrique aqueuse, lorsque la concentration du polymère dans la dispersion est d'environ 45% en poids.

12. Papier glacé obtenu en couchant des papiers avec une composition polymérique aqueuse telle que spécifiée dans l'une quelconque des revendications 1 à 11, et en séchant les papiers couchés.